# EUROPEAN PATENT SPECIFICATION

(11) **EP 2 783 106 B1**
(45) Date of publication and mention of the grant of the patent: **13.07.2016**
(21) Application number: 12809365.5
(22) Date of filing: 20.11.2012
(51) Int. Cl.: F03D 3/02, F03D 3/04, F03D 3/06

(54) **ACTIVE WINDMILL WITH THE AXIS OF ROTATION TRANSVERSE TO THE DIRECTION OF THE WIND**
AKTIVES WINDRAD MIT EINER QUER ZUR WINDRICHTUNG VERLAUFENDEN ROTATIONSACHSE
ÉOLIENNE ACTIVE À AXE DE ROTATION TRANSVERSAL À LA DIRECTION DU VENT

(30) Priority: 21.11.2011 PL 39705211
(43) Date of publication of application: 01.10.2014
(73) Proprietor: Winenerg Spólka Z Ograniczona Odpowiedzialnoscia Spolka Komandytowo - Akcyjna, 81-824 Sopot (PL)
(72) Inventor: DOERFFER Piotr, PL-80-461 Gdansk (PL)
(74) Representative: Kondrat, Mariusz
(86) International application number: PCT/PL2012/000125
(87) International publication number: WO 2013/077752

(56) References cited:
- WO-A1-01/34975
- DE-A1- 4 038 907
- FR-A1- 2 509 384
- US-A- 4 764 683

## Description

Object of this invention is the active windmill with the axis of rotation transverse to the direction of the wind. It may be mainly used in wind motors.

Windmills generally are divided into two characteristic groups, depending on the direction of the axis of rotation of the rotor. One group consists of windmills, in which the direction of the axis of rotation is parallel to the direction of the wind, and the second - of windmills, where the rotor rotation axis is directed transversely to the direction of the wind. Among the windmills with the axis transverse to the wind various types can be differentiated according to the type of force used. The operating principle of one of the known types is based on the difference in aerodynamic drag on both sides of the axis of rotation. Such windmills are provided with so-called Savonius rotor disclosed in U.S. patent number 1,697,574 (1929). This is a low-speed rotor starting at low wind speed and insensitive to wind direction. It has at least two curved blades set opposite each other on either side of the axis of rotation. One blade, producing more aerodynamic force, moves in the direction of the wind, while the second blade, producing less aerodynamic force, moves in the opposite direction to the wind. The resulting drive is due to the difference between aerodynamic forces on either side of the rotor rotation axis. There are also windmills with drum rotors, in which the rotor has a number of blades spread between the upper and lower limiting plane and arranged radially, symmetrically around the vertical rotation axis, forming the shape of rotating drum. Wind turbines with rotors of this design are described in Polish patent PL128970 and U.S. Patent 4,007,999.

The Polish PL 188 116 patent describes a wind turbine rotor with longitudinal blades fixed radially to the axis of rotation, in which the blades are fixed between the outer ring and the inner ring, and cover 2/3 of the area of the wheel ring so formed.

Also the Polish patent PL 200 550 describes a wind turbine with a rotor provided with multiple arms mounted at equal angular intervals about the vertical axis, and multiple blades arranged in blocks. The number of the blade blocks is selected from the range: two, three, and each block is provided with four blades arranged substantially parallel to the rotation axis, while subsequent blades in the blocks closer to the axis are offset from each block's symmetry axis in the rotor rotation direction.

There is a number of solutions aimed at increasing the efficiency of the above described rotors. One of the basic methods is to add guide veins on the outer periphery, which enhance the air inflow to the rotor. The wind powered turbine known from U.S. Patent 5553996 comprises of multiple blades arranged at an angle around the axis of the drum - shaped frame. The drum forming frame is provided with a cylindrical element mounted coaxially with the vertical axis of rotation, within the space formed by the rotating blades. This cylindrical element directs wind to the right path inside the drum, where it acts on the rotor blades. This solution provides different options of the shape of the blades and their mutual arrangement.

The rotor effectiveness can also be improved by covering the part of the rotor moving against the wind and producing aerodynamic drag. Such covering the rotor part implies the need to trace the wind direction. Moreover, covering only one side of the rotor introduces asymmetry. Thus, many concepts have combined covering the rotor part with a tandem rotor system. The solution featuring two rotors with covers set in mirror mode makes the system symmetrical and its rotors rotate in opposite directions, counter rotating. An example of the solution may be that disclosed in the patent application published under number DE 19718048A1. The two rotors are enclosed in a box casing. Several versions have been proposed, the essence of which consists in the minimum size and cover of the rotor part rotating against the wind. Thus, in an option the rotor axes are very close to each other, so that the rotor blades fit in between themselves. Whereas in another option the blades fold when moving against the wind, and unfold when moving with the wind.

Yet another solution in the same line is the windmill described in patent publication EP0064440A2. The windmill is shaped as symmetrical profile set in the vertical direction, and it is so mounted that it always sets along the wind. The two counter-rotating rotors are so built that the profile covers the rotor parts moving against the wind. Halves of the rotors moving with the wind stand out of the profile contour. In order to maximise the rotors' diameter their axes are so close to each other that the blades overlap.

**The next step in a similar type of construction is** U.S. Patent 4764683**. The shape of the profile is here replaced by inlet and outlet wedge. A characteristic feature is the introduction of an adjustable guiding plate at the said inlet. In the document** US4764683 **only degree of exposure of rotors is changed. Changing the guiding plate does not occur depending on the strength of the wind only depending on the setting of the yoke. Reduction of the opening angle of the guiding plate exposes the rotor blades and increasing the power of the rotors. Increasing the opening angle of the steering wheel causes the covering of the blades and power reduction obtained with the rotors.**

**Document** FR2509384 **discloses the device for transforming the energy of moving fluids, particularly gas streams such as air, or hydraulic, electrical energy, mechanical or thermal, is essentially constituted by turbines to transverse or tangential flow having no rotary control mechanism and by baffles channeling the fluid to the turbine, and is characterized in that the two deflectors are convergent-divergent deflectors, which together parallel profiles, and in that the surfaces of the two baffles are provided with photovoltaic cells.**

That design idea has been continued by the international patent application published under number WO2007045851. In this solution two convex profiles, parallel to each other, form a convergent- divergent channel. In each channel an rotor is set, whereby the rotor parts moving against the wind are hidden in profiles, and the driving parts are inside a channel.

Yet another solution is shown in international patent publication WO2004051080, in which two rotors are set besides each other, with rotation axes arranged in a line perpendicular to the wind, and are equipped with a windshield covering the parts moving against the wind, which are set between the axes.

Another solution is presented in the Polish patent application P 388704. The windmill has a guiding plate, which is a plate pivotally mounted on the mast. At the end of the guiding plate a rotor is mounted, which is driven by air slipping along the plate. The proposed design is also a tandem system. In the design the guiding plate directs the air collected along its entire length to this part of the rotor that moves with the wind, thus increasing its effectiveness.

The active windmill with the rotation axis transverse to the wind direction with at least one windmill module containing an assembly of counter-rotating Impellers operating in the tandem setting and provided with a two-part guiding plate that covers the impeller parts moving against the wind, wherein each of the guiding plates is located between the mast and one of the impellers, the guiding plate's right (K1) and left (K2) parts are separate elements and are connected with each other by tensioning assembly (ZN) **characterized in that impellers are permanently attached to the guiding plate and tensioning assembly (ZN) is a self-adjusting mechanism reacting to wind forces.**

**The active windmill wherein tensioning assembly (ZN), is a tensioning mechanism affecting symmetrically on the right guiding plate (K1) and left guiding plate (K2) towards the outside.**

The active windmill **is provided with a two-part guiding, wherein** each part of the guiding plate (**K1 and K2**) is a plate, the horizontal edge of which extends from mast (M) to rotor (W) periphery and its length (L) exceeds diameter (D) of rotor (W).

The active windmill wherein the right (K1) and left (K2) guiding plates **are the structural elements carrying the weight of the impellers,** wherein said guiding plates are connected on one side with vertical impeller (W) axes, and on the other side they are set on mast (M) independently of each other.

The active windmill wherein the right (K1) and left (K2) guiding plates are fitted, respectively, to right bush (T1) and left bush (T2) on mast (M).

The active windmill wherein the tensioning assembly (ZN) is made up of pairs of push (P) and pull (C) rods connected by a tilting joint on one side to the right (K1) and left (K2) guiding plates, and on the other side with the ends of at least one tensioning element (S).

The active windmill wherein the right (K1) and left (K2) guiding plates are connected on one side with vertical impeller (W) axes, and on the other side they are fitted to mast (M) do common bush (T).

The active windmill wherein the tensioning assembly (ZN) is made up of pairs of push rods (P) connected by a tilting joint on one side with the right (K1) and left (K2) guiding plates, and on the other side with the end of at least one tensioning element (S), the other end of which is attached to common bush (T) on mast (M).

The active windmill wherein the tensioning assembly (ZN) consists of at least one tensioning element (S) with its ends fitted, respectively, to the right (K1) and left (K2) guiding plates and surrounding mast (M) off windmill (MT) module's outside.

The advantage of the hereby proposed windmill is that it allows for very efficient use of the wind, particularly at its low speeds, and at the same time it protects the windmill from very fast winds, by folding it under the impact of aerodynamic forces.

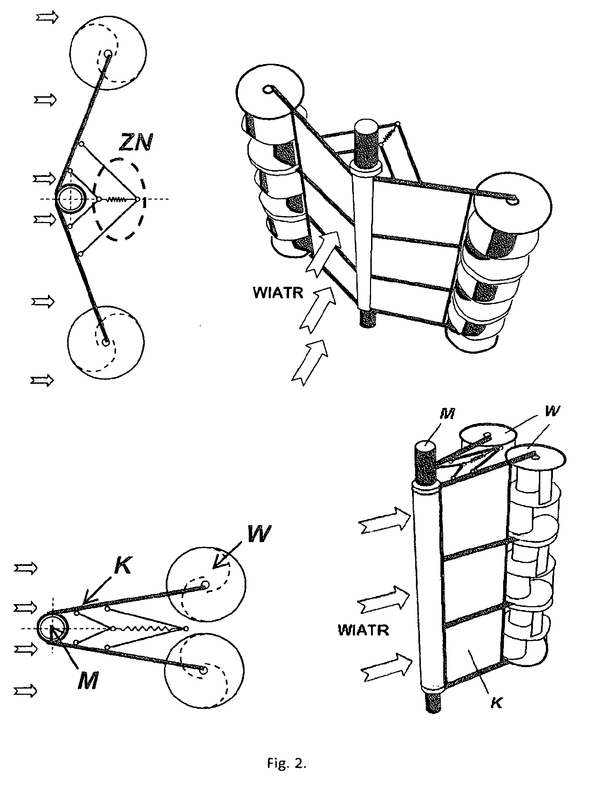

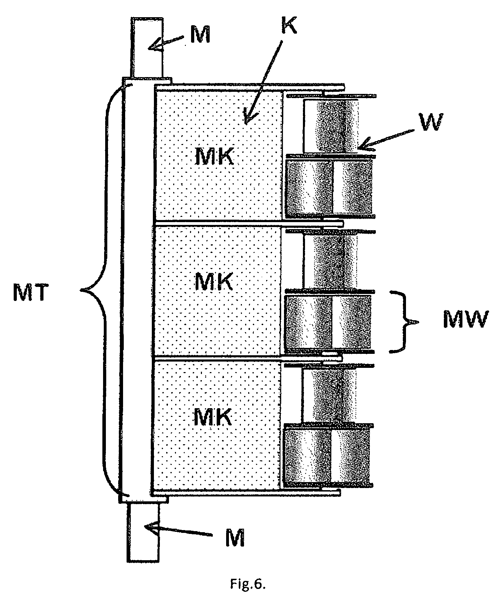

The solution's implementation example is illustrated by the drawing, in which fig. 1 is a schematic representation of the rotor system with the guiding plate, fig. 2 schematically shows the windmill operating principle, fig.3 -the first design option, fig. 4 - the second design option, fig. 5 -the third design option, fig. 6 - overall windmill module diagram.

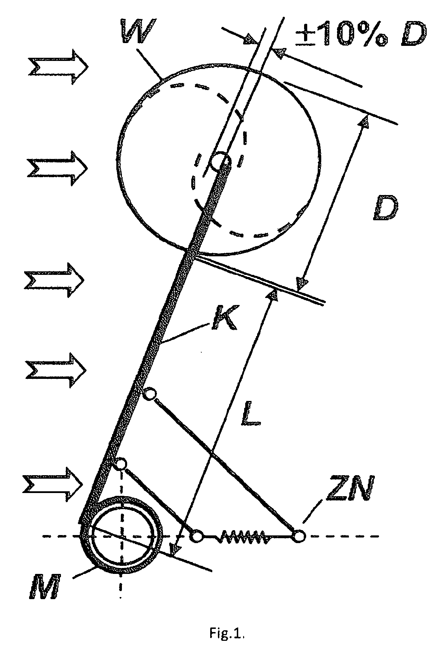

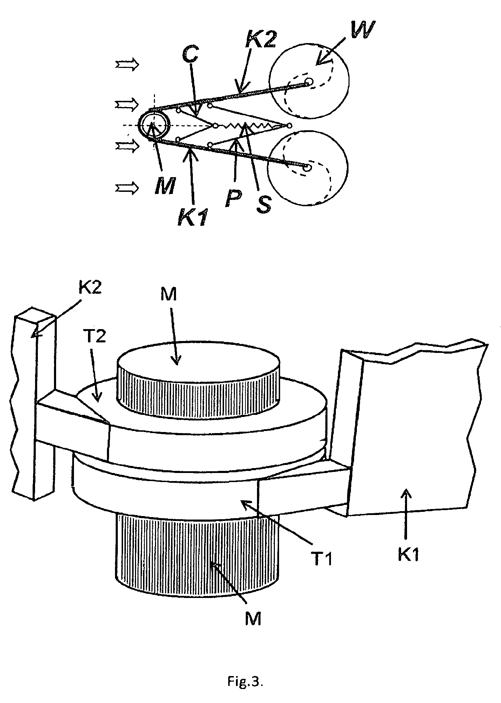

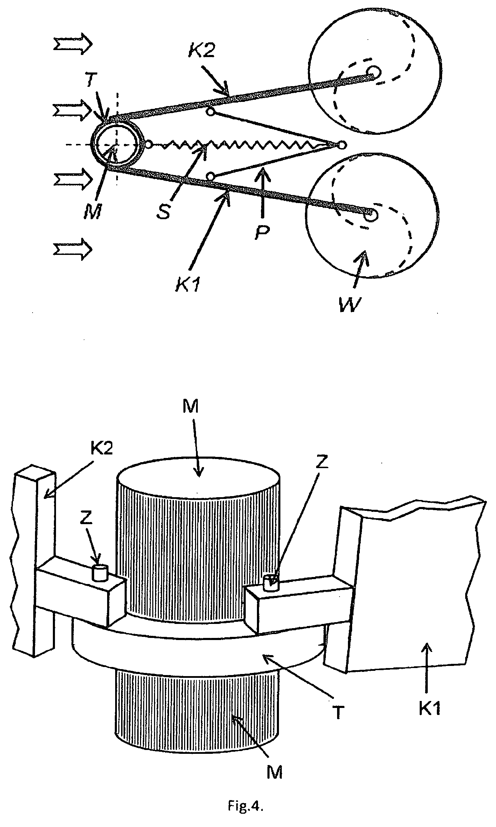

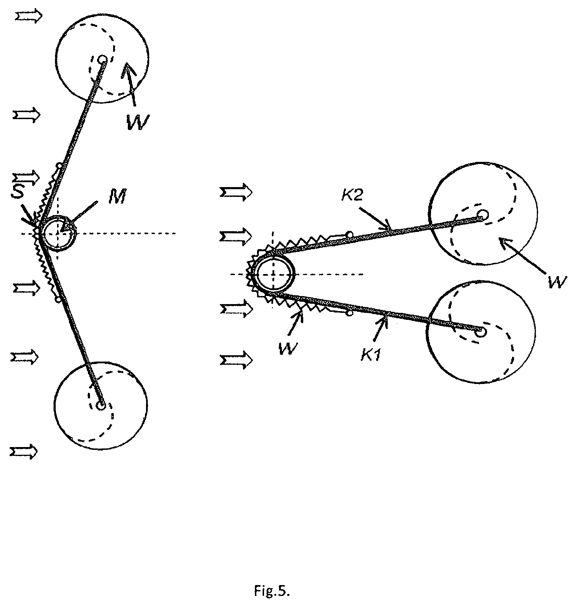

In the example implementation the tandem windmill design is applied. To mast M a guiding plate K, consisting of two separate arms, is attached, and rotors W at its ends. Guiding plate K is set between bars, to which rotors W are also attached. Each part of guides K is a plate, which collects a large portion of the wind, and directs it to rotor W. For this purpose length L of each part of guiding plate K is larger than diameter D of rotor W, i.e. L > D, as shown in fig.1. For the plate's action as effective guide, the axis of rotor W should be at the extension of guiding plate K. This alignment's tolerance is ± 10% D. The guiding plates K are rectangles with one edge pivotally mounted on mast M, and their height corresponds to the length of rotors W, the axes of which are set between the bars which are the extension of the guiding plates K perpendicular to mast M. The right part of guiding plate K1 and its left part K2 are connected by tensioning assembly ZN, owing to which the angle between the arms of guiding plate K may change under the impact of aerodynamic forces, when the wind is slipping along guiding plate K and is driving rotor W, the axis of which is located on the extension of the surface of guiding plate. The designs of the windmill's tensioning assembly ZN may differ, depending on the windmill's suspension. In the first design option, in fig 3, left and right guiding plates K1 and K2 are separately mounted to mast M and they rotate completely independently of each other. Right guiding plate K1 is connected to right bush T1 mounted on mast M, and left guiding plate K2 - to left bush T2 mounted on mast M. Tensioning assembly ZN in this option consists of four push rods P, four pull rods C, and a tensioning element S. One pair of push rods P has its ends on one side pivotally attached to the upper and lower frame of right guiding plate K1, and the other pair of push rods P - to the upper and lower frame of left guiding plate K2, whereas the other ends of all the push rods P are pivotally mounted together to one end of tensioning element S located in the middle of the height of guiding plate K. To the second end of tensioning element S pivotally mounted together are the ends of two pairs of pull rods C, the other ends of which are pivotally connected to the upper and lower frame, respectively, of guiding right and left plates K1 and K2, between the mast and the mounting of push rods P. In the example implementation pull rods C can be ropes, and tensioning element S - a spring. In the second design option, shown in fig. 4, between the lower and upper bearings flanged bush T is located, common to right and left guiding plates K1 and K2. The bush flanges are provided with hinges Z, to which the both guiding plates are mounted. Hinges Z may be fixed to common bush T also in a different way. Wind, turning the entire windmill, makes the entire bush rotate. With this suspension of the windmill, the bush on the mast rotates together with the two guiding plates. That's why tensioning assembly ZN can be very simple and consist of two pairs of push rods P and one tensioning element S. Tensioning element S is attached at one end to bush T on mast M in the middle of the guiding plate height. The other end of tensioning element S is attached to push rods P, the other ends of which are fitted to right and left guiding plates K1 and K2, respectively. The both ends of push rods P are pivotally mounted. Tensioning element S through push rods P opens the windmill's arms. In strong wind, when the guiding plates are under the impact of large aerodynamic forces, the tensioning element extends thus allowing the windmill to fold. Fig. 5 shows the third, simplest design option of tensioning assembly ZN, which consists of tensioning element 5 in the form of a spring fitted to right and left guiding plates K1, K2 and lying around the mast. Folding of the guiding plate's both arms stretches the spring and bends it around the mast. The resultant force opens the windmill in a light wind, and allows for its folding in a strong wind. In other design options tensioning assembly ZN may consist of another, different, number of tensioning elements S, push rods P and pull rods C, which depend, in particular, on the height of guiding plates K.

Every rotor W may consist of one or more rotor modules MW, which are set in bearing in guiding plate K, which may also consist of one or several modules. The guiding plates are connected and set in upper and lower bearings on mast M. In the simplest design option, the windmill can be made up of a single rotor module MW mounted in a single guiding plate module K fitted directly to mast M. This modular design allows for easy adjustment of windmill power to actual needs. The entire windmill design can be modular, which means that multiple windmill modules MT can be mounted on a single mast. Each MT windmill module's guiding plate K can be separately set in bearings on mast M, but also multiple guiding plates can be screwed together and jointly attached to mast M.

In light wind, parts of the guiding plates are opened up to the maximum of approximately 140° between them. In light wind, the utilised wind surface area is very large compared to that occupied by the rotors. The guiding plates accelerate the air flow, so its speed around the rotor exceeds the wind speed. Because of this, the windmill operates at such low speeds, at which no standard Savonius rotor or drum rotor can rotate. Such large surface area, however, is dangerous in strong winds. That's why under aerodynamic pressure the tensioning assembly allows to fold the windmill to the closed position. Windmill's closed position reduces the utilised wind surface area, and thus protects the windmill from extensive loads. At the same time the power generated by the windmill will be much smaller.

## Claims

1. The active windmill with the rotation axis transverse to the wind direction with at least one windmill module containing an assembly of counter-rotating impellers operating in the tandem setting and provided with a two-part guiding plate that covers the impeller parts moving against the wind, wherein each of the guiding plates is located between the mast and one of the impellers, the guiding plate's right (K1) and left (K2) parts are separate elements and are connected with each other by tensioning assembly (ZN) **characterized in that impellers are permanently attached to the guiding plate and tensioning assembly (ZN) is a self-adjusting mechanism reacting to wind forces.**

2. **The active windmill according to claim 1, characterized in that tensioning assembly (ZN), is a tensioning mechanism affecting symmetrically on the right guiding plate (K1) and left guiding plate (K2) towards the outside.**

3. The active windmill according to claim 1, **characterized in that is provided with a two-part guiding, wherein** each part of the guiding plate (**K1 and K2**) is a plate, the horizontal edge of which extends from mast (M) to rotor (W) periphery and its length (L) exceeds diameter (D) of rotor (W).

4. The active windmill according to claim **3**, **characterized in that** the right (K1) and left (K2) guiding plates **are the structural elements carrying the weight of the impellers,** wherein said guiding plates are connected on one side with vertical impeller (W) axes, and on the other side they are set on mast (M) independently of each other.

5. The active windmill according to **any of preceding claims**, **characterized in that** the right (K1) and left (K2) guiding plates are fitted, respectively, to right bush (T1) and left bush (T2) on mast (M).

6. The active windmill according to **any of preceding claims**, **characterized in that** the tensioning assembly (ZN) is made up of pairs of push (P) and pull (C) rods connected by a tilting joint on one side to the right (K1) and left (K2) guiding plates, and on the other side with the ends of at least one tensioning element (S).

7. The active windmill according to **any of preceding claims**, **characterized in that** the right (K1) and left (K2) guiding plates are connected on one side with vertical impeller (W) axes, and on the other side they are fitted to mast (M) do common bush (T).

8. The active windmill according to **any of preceding claims**, **characterized in that** the tensioning assembly (ZN) is made up of pairs of push rods (P) connected by a tilting joint on one side with the right (K1) and left (K2) guiding plates, and on the other side with the end of at least one tensioning element (S), the other end of which is attached to common bush (T) on mast (M).

9. The active windmill according to **any of preceding claims**, **characterized in that** the tensioning assembly (ZN) consists of at least one tensioning element (S) with its ends fitted, respectively, to the right (K1) and left (K2) guiding plates and surrounding mast (M) off windmill (MT) module's outside.

## Patentansprüche

1. Aktive Windmühle mit einer zur Windrichtung transversalen Rotationsachse und mit mindestens einem Windmühlenmodul enthaltend einen Satz von gegenrotierenden Laufrädern, die in Tandemanordnung betrieben werden und ausgestattet mit einer zweiteiligen Führungsplatte, die die beweglichen Laufradeile vor dem Wind abdeckt, wobei jede der Abdeckplatten zwischen dem Mast und einem der Laufräder angeordnet ist, und die rechten (K1) und linken (K2) Teile der Führungsplatte separate Bestandteile sind, die miteinander mittels eines Spannsatzes (ZN) verbunden sind, **gekennzeichnet dadurch, dass die Laufräder dauerhaft an die Führungsplatte befestigt sind und der Spannsatz (ZN) ein selbsteinstellbarer Mechanismus ist, der auf die Windkraft reagiert.**

2. **Aktive Windmühle nach Anspruch 1, gekennzeichnet dadurch, dass der Spannsatz (ZN) ein symmetrisch auf die rechte Führungsplatte (K1) und die linke Führungsplatte (K2) nach außen wirkender Spannmechanismus ist**

3. Aktive Windmühle nach Anspruch 1, **gekennzeichnet dadurch, dass** sie **mit einer zweiteiligen Führung ausgestattet ist, wobei** jedes Teil der Führungsplatte (**K1 und K2**) eine Platte ist, deren horizontaler Rand vom Mast (M) zum Umriss des Rotors (W) hervorsteht, und deren Länge (L) den Durchmesser (D) des Rotors (W) überschreitet.

4. Aktive Windmühle nach Anspruch 2, 3, **gekennzeichnet dadurch, dass** die rechte (K1) und linke (K2) Führungsplatte **strukturelle Bestandteile sind, die die Last der Laufräder Tragen,** wobei die Führungsplatten an einer Seite mit den vertikalen Achsen der Laufräder (W) verbunden sind und an der anderen Seite unabhängig voneinander am Mast (M) angeordnet sind.

5. Aktive Windmühle nach **einem der vorigen Ansprüche, gekennzeichnet dadurch, dass** die rechte (K1) und die linke(K2) Führungsplatte jeweils an der rechten Buchse (T1) und der linken Buchse (T2) am Mast angeordnet sind(M).

6. Aktive Windmühle nach **einem der vorigen Ansprüche, gekennzeichnet dadurch, dass** der Spannsatz (ZN) aus einem Paar Schubstangen (P) und Zugstangen (C) besteht, die mittels eines Schwenkgelenk an einer Seite mit der rechten (K1) und linken (K2) Führungsplatte, an am anderen Ende mit mindestens einem Spannelement (S) verbunden sind.

7. Aktive Windmühle nach **einem der vorigen Ansprüche, gekennzeichnet dadurch, dass** die rechte (K1) und linke (K2) Führungsplatte an einer Seite mit den vertikalen Achsen der Laufräder (W) verbunden sind, und an der anderen Seite am Mast (M) befestigt sind und eine allgemeine Buchse (T) bilden.

8. Aktive Windmühle nach **einem der vorigen Ansprüche, gekennzeichnet dadurch, dass** der Spannsatz (ZN) aus einem Paar von Schubstangen (P) besteht, die mittels eines Schwenkgelenk an einer Seite mit der rechten (K1) und linken (K2) Führungsplatte verbunden ist, und am anderen Ende mit mindestens einem Spannelement (S), dessen anderes Ende an die allgemeine Buchse (T) am Mast (M) befestigt ist.

9. Aktive Windmühle nach **einem der vorigen Ansprüche, gekennzeichnet dadurch, dass** der Spannsatz (ZN) aus mindestens einem Spannelement (S) besteht, dessen Enden jeweils an der rechten (K1) und linken (K2) Führungsplatte befestigt sind und den Mast (M) des Windmühlenmoduls (MT) von außen umgeben.

## Revendications

1. Le moulin à vent actif avec l'axe de rotation transversal à la direction du vent avec au moins un module de moulin à vent comportant un ensemble des impulseurs tournant en sens inverse fonctionnant en tandem et muni d'une plaque de guidage en deux parties qui couvre les parties d'impulseur en mouvement contre le vent, dans lequel chacune des plaques de guidage est située entre le mât et un des impulseurs, les parties droite (K1) et gauche (K2) de la plaque de guidage sont des éléments séparés et sont reliées entre elles par un ensemble de tension (ZN),**caractérisé en ce que** les impulseurs sont attachés de manière permanente à la plaque de guidage et l'ensemble de tension (ZN) est un mécanisme d'auto-ajustement réagissant aux forces de vent.

2. Le moulin à vent actif selon la revendication 1, **caractérisé en ce que** l'ensemble de tension (ZN) est un mécanisme de tension agissant de manière symétrique sur la plaque de guidage droite (K1) et la plaque de guidage gauche (K2) vers l'extérieur.

3. Le moulin à vent actif selon la revendication 1, **caractérisé en ce qu'**il est muni d'un guidage en deux parties, dans lequel chaque partie de la plaque de guidage (K1 et K2) est une plaque dont le bord horizontal s'étend du mât (M) à la périphérie du rotor (W) et sa longueur (L) dépasse le diamètre (D) du rotor (W).

4. Le moulin à vent actif selon la revendication 3, **caractérisé en ce que** les plaques de guidage droite (K1) et gauche (K2) sont les éléments structuraux portant le poids des impulseurs, dans lequel lesdites plaques de guidage sont reliées d'un côté aux axes verticaux des impulseurs (W), et de l'autre côté elles sont fixées sur le mât (M) indépendamment les unes des autres.

5. Le moulin à vent actif selon l'une quelconque des revendications précédentes, **caractérisé en ce que** les plaques de guidage droite (K1) et gauche (K2) sont montées, respectivement, sur une douille droite (T1) et une douille gauche (T2) sur le mât (M).

6. Le moulin à vent actif selon l'une quelconque des revendications précédentes, **caractérisé en ce que** l'ensemble de tension (ZN) est constitué de paires de tiges de poussée (P) et tiges de traction (C) reliées par un joint basculant d'un côté aux plaques de guidage droite (K1) et gauche (K2), et de l'autre côté aux extrémités d'au moins un élément de tension (S).

7. Le moulin à vent actif selon l'une quelconque des revendications précédentes, **caractérisé en ce que** les plaques de guidage droite (K1) et gauche (K2) sont reliées d'un côté aux axes verticaux des impulseurs (W), et de l'autre côté elles sont fixées sur le mât (M) à une douille commune (T).

8. Le moulin à vent actif selon l'une quelconque des revendications précédentes, **caractérisé en ce que** l'ensemble de tension (ZN) est constitué de paires de tiges de poussée (P) reliées par un joint basculant d'un côté aux plaques de guidage droite (K1) et gauche (K2), et de l'autre côté à l'extrémité d'au moins un élément de tension (S) dont l'autre extrémité est attachée à une douille commune (T) sur le mât (M).

9. Le moulin à vent actif selon l'une quelconque des revendications précédentes, **caractérisé en ce que** l'ensemble de tension (ZN) est constitué d'au moins un élément de tension (S) dont les extrémités sont montées, respectivement, sur les plaques de guidage droite (K1) et gauche (K2) et qui entoure le mât (M) de l'extérieur du module de moulin à vent (MT).
